# EUROPEAN PATENT APPLICATION

(11) **EP 1 667 362 A1**
(43) Date of publication of application: **07.06.2006**
(21) Application number: 05025760.9
(22) Date of filing: 25.11.2005
(51) Int. Cl.: H04L 12/26

(54) **Apparatus and method for the network diagnosis**

(30) Priority: 26.11.2004 KR 2004098266
(71) Applicant: Samsung Electronics Co., Ltd., Suwon-si, Gyeonggi-Do (KR)
(72) Inventor: Jeon, Jae-Min, Hanam-si Gyeonggi-do (KR)
(74) Representative: Lang, Johannes

(57) **Abstract**

A network diagnostic method and apparatus includes: a database adapted to store set data for diagnosis; a scheduler adapted to determine whether a condition to perform a diagnosis is satisfied, and to begin diagnosis when it has been determined that the condition to perform a diagnosis has been satisfied; and a diagnostic manager adapted to perform diagnosis according to the set data stored in the database in response to an instruction to begin diagnosis from the scheduler.

## Description

### BACKGROUND OF THE INVENTION

### Field of the Invention

The present invention relates to a network diagnosis, and more particularly, to a network diagnostic apparatus and a network diagnostic method for comprehensively managing a network diagnosis by its own standard.

### Description of the Related Art

Operators of network should regularly or irregularly diagnose a state of lines, resources, performance and so on of network managing devices and network devices, i.e. objects to be managed by the network managing devices, for normal operation of network. Hereinafter, to diagnose a state of lines, resources, performance and so on of such network managing devices and the network devices will be called as "network diagnosis".

The operators prepare diagnostic items for diagnosing network, perform corresponding functions according to the prepared diagnostic items by running a network managing program, and prepare an appraisal report on the diagnosed results. The operators must then perform a diagnosis individually for all of the diagnostic items.

When performing a network diagnosis, the operators must individually diagnose all diagnostic items for performing the network diagnostic functions for each item. There are many normally used network diagnostic items. Because functions of such diagnostic items are scattered, when performing a network diagnosis, the operators must perform an individual diagnosis for each of the diagnostic items. In addition, the diagnosed results must be collected on a basis of the diagnostic items.

On the other hand, a network diagnosis does not present diagnostic standards to the operators on a basis of diagnostic item. Therefore, the operators diagnose and appraise by subjective judgment without consistent standards for the network diagnosis, so that the network diagnosis lacks objectivity and consistency.

Therefore, when performing a network diagnosis, the operators must spend a considerable amount of time preparing a report on the diagnosed results.

When performing the network diagnosis using such a technique, the operators must repeatedly perform menu transfer, and result analysis and report preparation after performing diagnostic functions equal to the number of diagnostic items. In addition, because there is a difference in choice of diagnostic items for each operator, objectivity and consistency are lacking in diagnosis and appraisal. In order to solve such problems, it is necessary to provide the operators with a network managing device and a network managing method for comprehensively managing the network diagnosis in accordance with consistent diagnostic standards.

### SUMMARY OF THE INVENTION

The present invention provides a network managing device and a network managing method for comprehensively performing diagnosis, appraisal, and report on a network managing device and object devices for management, by automating diagnostic procedures of network.

Also, the present invention provides a network managing device and a network managing method for objectively and consistently performing a network diagnosis in accordance with a consistent appraisal standard.

According to one aspect of the present invention, a network diagnostic apparatus is provided comprising: a database adapted to store set data for diagnosis; a scheduler adapted to determine whether a condition to perform a diagnosis is satisfied, and to begin diagnosis when it has been determined that the condition to perform a diagnosis has been satisfied; and a diagnostic manager adapted to perform diagnosis according to the set data stored in the database in response to an instruction to begin diagnosis from the scheduler.

The network diagnostic apparatus preferably further comprises a data interface adapted to receive the set data from outside and to store the set data in the database.

The network diagnostic apparatus preferably further comprises a user interface adapted to receive set data input by an operator via a data input unit and to output the set data input by the operator from the data input unit to the data interface.

The set data input unit preferably comprises a screen adapted to display set items that the operator can select and a point-instruction input unit adapted to select items displayed on the screen.

The set data input from the user interface is preferably transmitted to the database via the data interface and the diagnostic manager.

The scheduler is adapted to determine whether a diagnostic performance condition is satisfied using the set data.

The scheduler is preferably adapted to determine whether diagnostic performance conditions are satisfied upon a determination that there is a diagnostic item for performing a diagnosis at present.

The diagnostic manager preferably comprises a first diagnostic manager performing as a main diagnostic unit and a second diagnostic manager adapted to perform a diagnosis according to instructions input from the first diagnostic manager.

The first diagnostic manager is preferably adapted to request diagnostic items to perform a diagnosis from the database in response to an instruction to begin a diagnostic performance from the scheduler.

The second diagnostic manager is preferably adapted to receive item data to perform a diagnosis from the first diagnostic manager and to set data for each item and to perform the diagnosis according to the received data.

The diagnostic manager is preferably adapted to collect the diagnosed result after performing the diagnosis according to the set data.

The diagnostic manager is preferably adapted to appraise the diagnosed results by comparing the collected diagnostic results with diagnostic reference values included in the set data.

According to another aspect of the present invention, a network diagnostic apparatus is provided comprising: a data interface adapted to receive instructions for diagnostic performance and set data for diagnosis from outside; and a diagnostic manager adapted to receive instructions for the diagnostic performance and set data from the data interface and to perform a diagnosis according to the set data.

The network diagnostic apparatus preferably further comprises a user interface adapted to receive set data input by an operator via a data input unit and to output the set data input by the operator from the data input unit to the data interface.

The set data input unit preferably comprises a screen adapted to display set items that the operator can select and a point-instruction input unit adapted to select items displayed on the screen.

The diagnostic manager is preferably adapted to appraise the diagnosed results by collecting the diagnosed results after performing the diagnosis according to the set data and comparing the collected diagnosed results with a diagnostic reference values included in the set data.

According to yet another aspect of the present invention, a network diagnostic method is provided comprising; receiving set data from an operator, the set data including data of a diagnostic item and a diagnostic cycle of a network to perform a diagnosis; and performing a diagnosis for each diagnostic item according to the received set data.

The network diagnostic method preferably further comprises collecting, appraising, and storing the diagnosed results from the performed diagnosis.

Performing the diagnosis preferably comprises determining whether it is time to perform the diagnosis for each diagnostic item, and performing the diagnosis for each diagnostic item upon a determination that it is the time to perform the diagnosis.

### BRIEF DESCRIPTION OF THE DRAWINGS

A more complete appreciation of the present invention, and many of the attendant advantages thereof, will be readily apparent as the present invention becomes better understood by reference to the following detailed description when considered in conjunction with the accompanying drawings in which like reference symbols indicate the same or similar components, wherein:
Figs. 1A-1H are diagrams of network diagnostic functions for each function according to a network diagnosis;
Fig. 2 is a flowchart of diagnostic performance for each network diagnostic function according to a network diagnosis;
Fig. 3 is a flowchart of diagnostic order according to a network diagnosis;
Fig. 4 is a view of classified items of a network diagnostic function provided by an embodiment of the present invention;
Fig. 5 is a view of detailed network diagnostic items according to a classification method of Fig. 4;
Fig. 6 is a block diagram of a network diagnostic apparatus according to an embodiment of the present invention;
Fig. 7 is a view of a connecting relationship between structural elements of the network diagnostic apparatus of Fig. 6;
Fig. 8 is a view of network diagnostic functions for comprehensive management according to an embodiment of the present invention;
Fig. 9 is a view of set data according to the network diagnosis of an embodiment of the present invention;
Fig. 10 is a view of automatic diagnostic order of network to be operated in accordance with the setting of Fig. 9 according to one embodiment of the present invention;
Fig. 11 is a view of diagnostic order of manual diagnosis of network according to another embodiment of the present invention; and
Fig. 12 is a flowchart of diagnostic order according to the network diagnosis of an embodiment of the present invention.

### DETAILED DESCRIPTION OF THE INVENTION

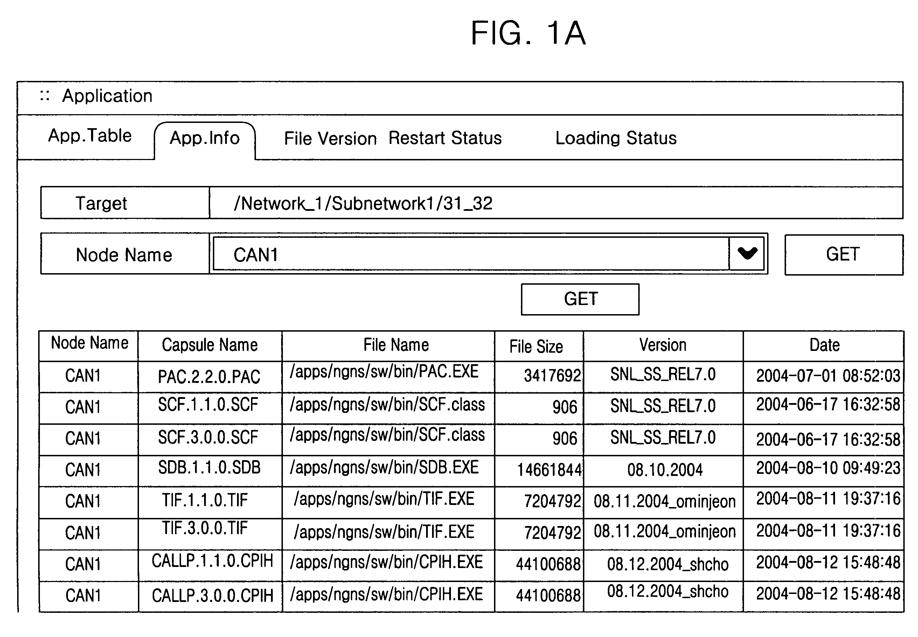

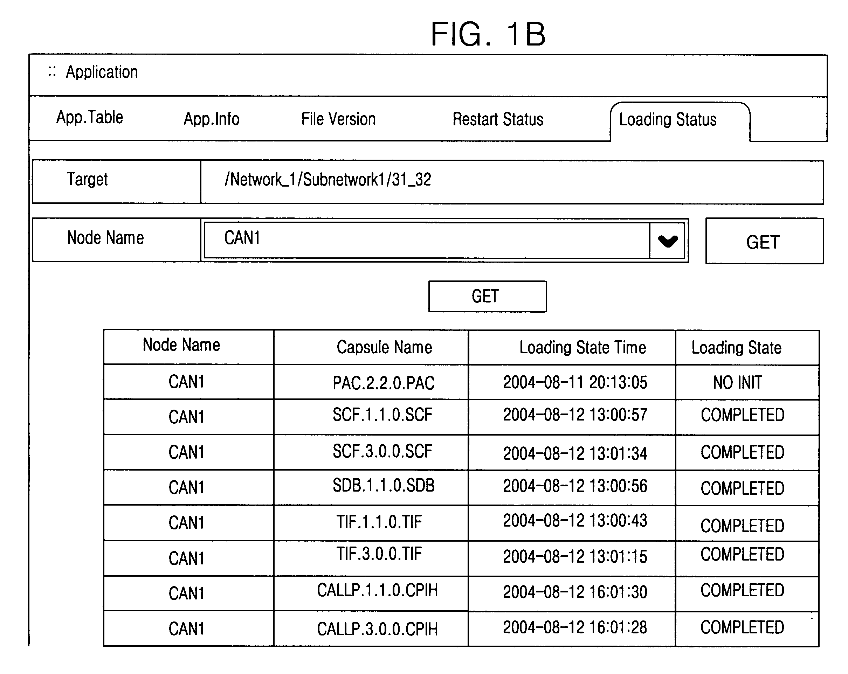

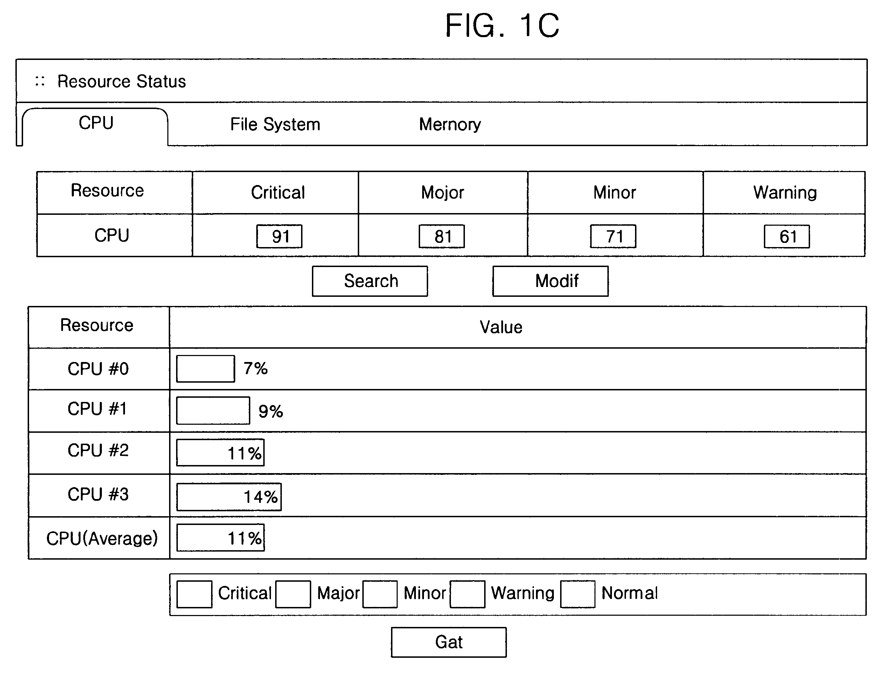

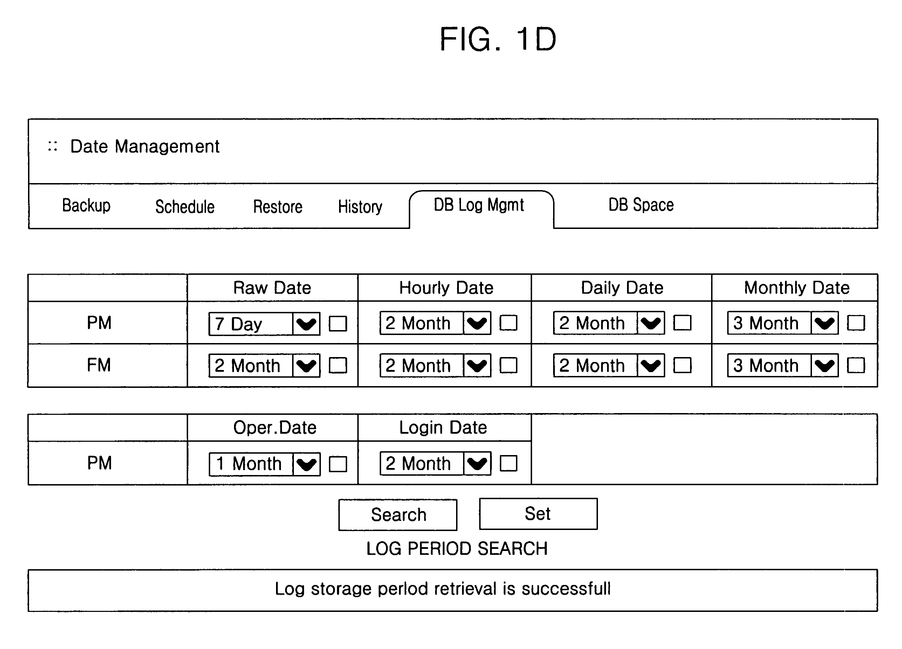

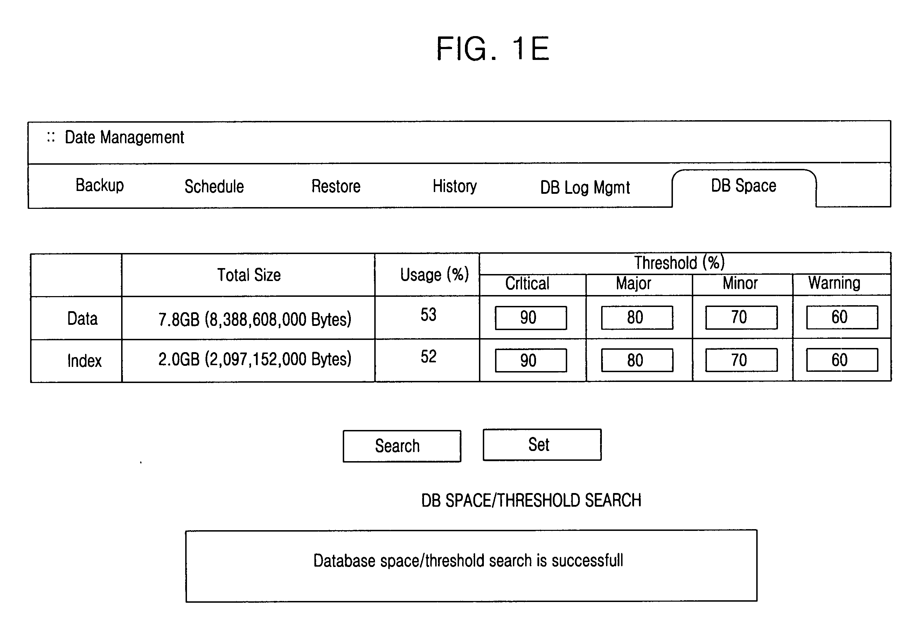

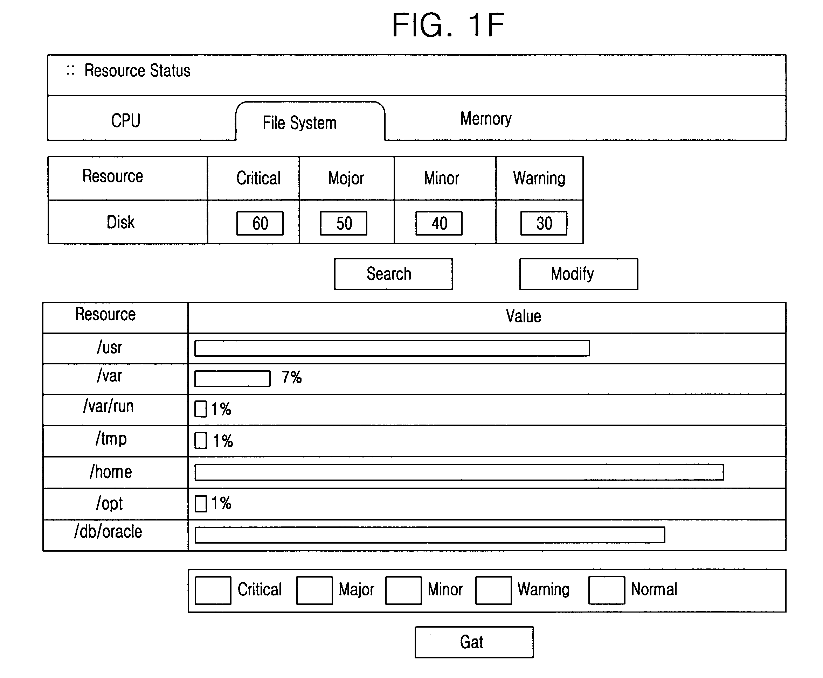

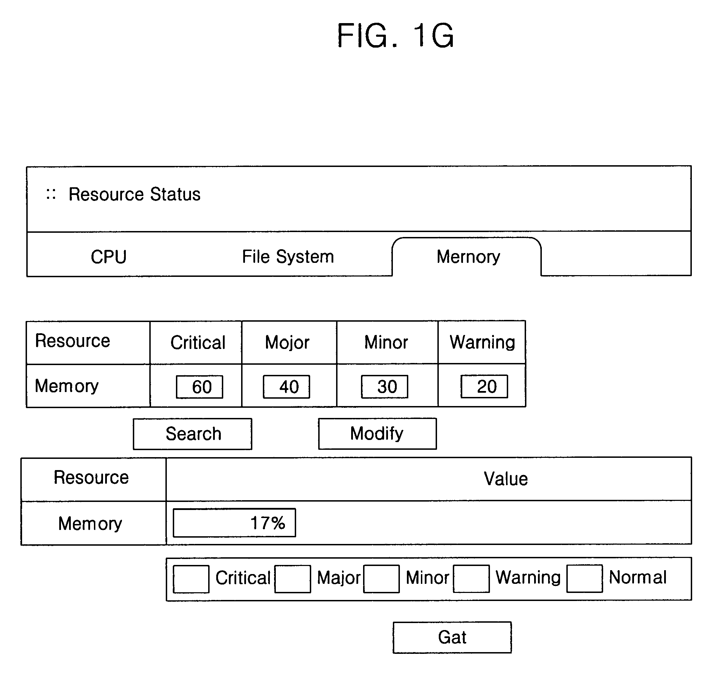

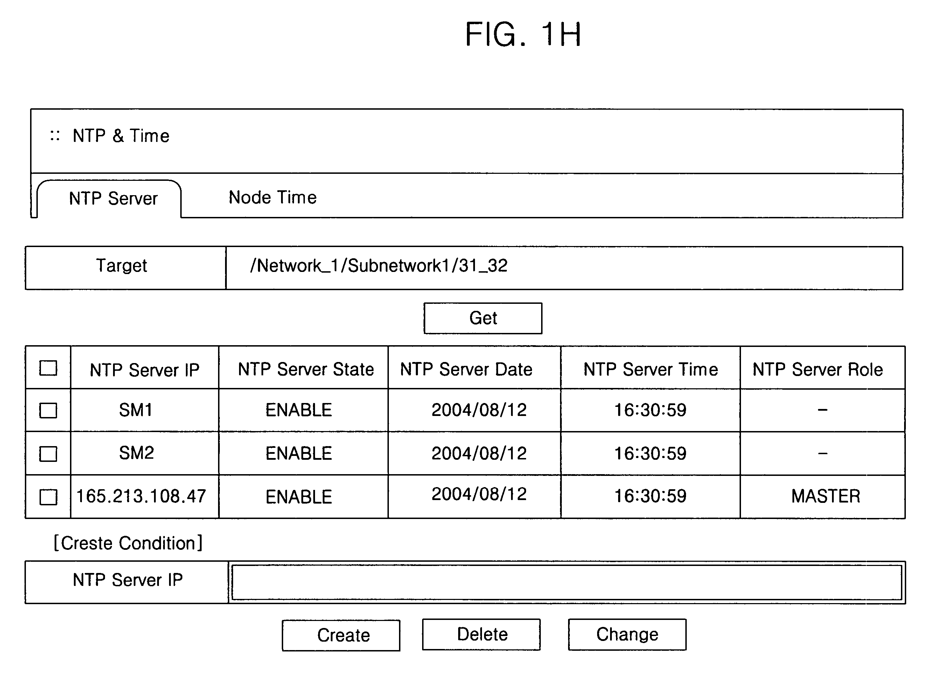

Figs. 1A-1H are diagrams of network diagnostic functions for each function according to a network diagnosis.

As shown in Figs. 1A-1H, when performing a network diagnosis, the operators must individually diagnose all diagnostic items for performing the network diagnostic functions for each item. Figs. 1A-1H are diagnostic Items according to eight different network diagnostic functions, but there are many additional network diagnostic items. Because functions of such diagnostic items are scattered, when performing a network diagnosis, the operators must perform an individual diagnosis for each of the diagnostic items. In addition, the diagnosed results must be collected on a basis of the diagnostic items.

On the other hand, a network diagnosis does not present diagnostic standards to the operators on a basis of diagnostic item. Therefore, the operators diagnose and appraise by subjective judgment without consistent standards for the network diagnosis, so that the network diagnosis lacks objectivity and consistency.

Therefore, when performing a network diagnosis, the operators must spend a considerable amount of time preparing a report on the diagnosed results.

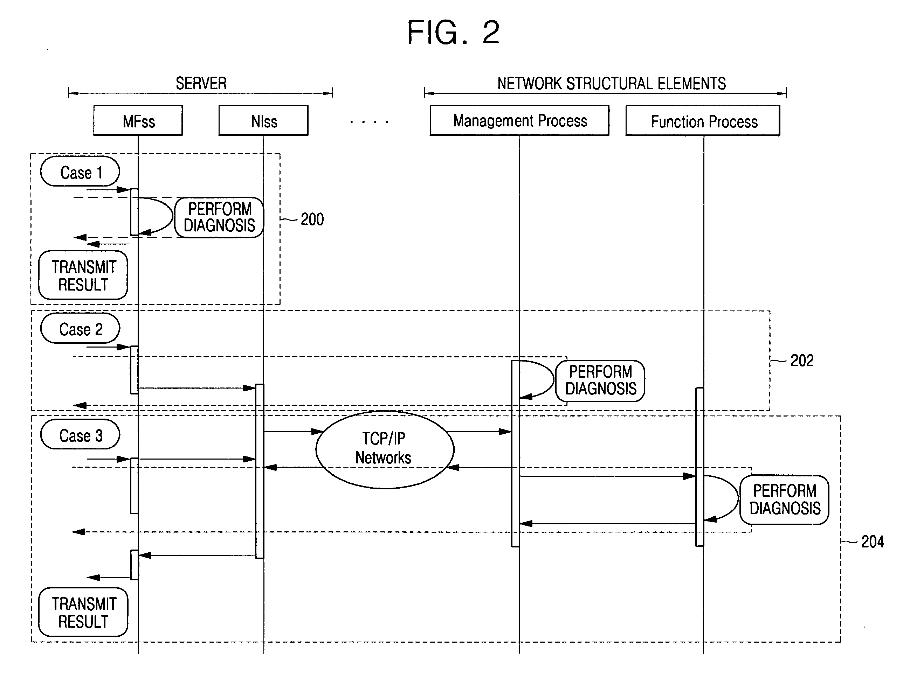

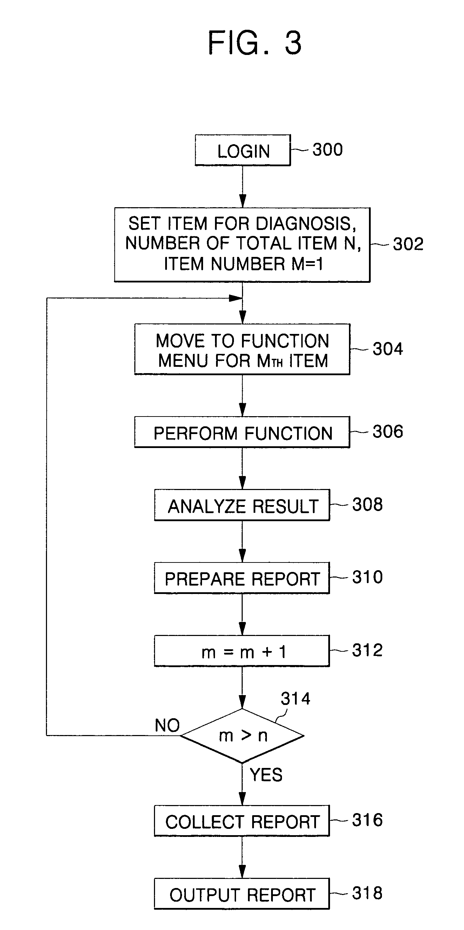

More problems with such a network diagnosis is described in detail below with reference to Figs. 2 and 3.

Fig. 2 is a view of diagnostic performance for each network diagnostic function according to a network diagnosis.

Case 1 of Fig. 2 is diagnostic processes of a network managing device, and cases 2 and 3 are diagnostic processes of network structural elements, i.e. an object to be managed by the network managing device. As shown in Fig. 2, the network diagnosis is variously performed depending on the subject and such network diagnosis has been individually preformed.

Fig. 3 is a flowchart of diagnostic order according to a network diagnosis.

A network diagnosis comprises a process 302 of setting each item to diagnose, processes 304 to 314 of performing diagnosis of the set items one by one, and a process 316 of collecting reports on the diagnosed results, and a process 318 of outputting the collected reports.

As described with reference to Figs. 1A-1H, 2, and 3, when performing the network diagnosis using such a technique, the operators must repeatedly perform menu transfer, and result analysis and report preparation after performing diagnostic functions equal to the number of diagnostic items. In addition, because there is a difference in choice of diagnostic items for each operator, objectivity and consistency are lacking in diagnosis and appraisal. In order to solve such problems, it is necessary to provide the operators with a network managing device and a network managing method for comprehensively managing the network diagnosis in accordance with consistent diagnostic standards.

Hereinafter, exemplary embodiments according to the present invention are described in detail with reference to the accompanying drawings.

The present invention provides an operator with convenience, by integrating diagnosis, appraisal, and report on a network managing device and object devices to be managed by the network managing device by automating the diagnostic procedures of a network. The present invention also provides an opportunity to select a format of a diagnostic method (for example, automatic diagnosis, manual diagnosis, etc.) that the operator wants, and allow objective and consistent diagnosis in accordance with a predetermined appraisal standard at a predetermined time.

Diagnostic functions to be integrated by the present invention are described below before describing a network diagnostic apparatus and a network diagnostic method according to the present invention.

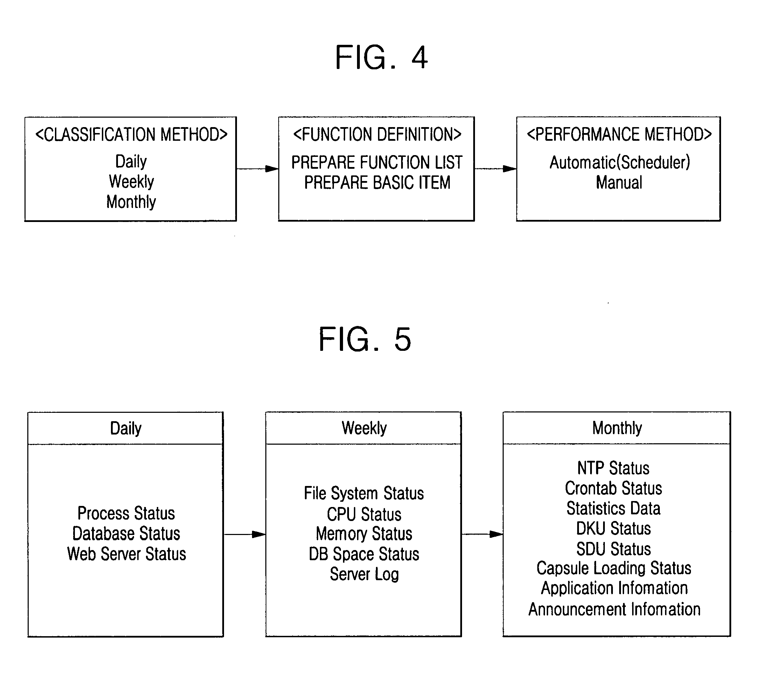

Fig. 4 is a view of classified items of network diagnostic functions with which an embodiment of the present invention comprehensively provides.

As shown in Fig. 4, the present invention can integrate a classification method, a function definition, and a performance method, etc., according to the diagnostic functions of network,

Fig. 4 is a diagram illustrating a classification of each diagnostic method according to the diagnostic time, concerning a classification method of the network diagnostic functions. In Fig. 4, each of diagnostic functions is classified into functions to perform diagnosis on a daily basis, a weekly basis, and a monthly basis.

Fig. 4 indicates whether a list of diagnostic functions (a function list) which the operator can select or a basic item is provided to the operator, concerning a definition of a network diagnostic functions. In addition, Fig. 4 indicates that it is possible to automatically, or manually perform the network diagnosis. The automatic performance method is a method of performing the network diagnosis at a predetermined time set by a scheduler.

Fig. 4 is just an example provided for an understanding of the present invention. A network diagnostic function can be variously classified by other examples not presented. That is, it is assumed that integration of all diagnostic functions for network is possible by applying the present invention.

Fig. 5 is a view of detailed network diagnostic items according to the classification method of Fig. 4, where it shows diagnostic functions to be provided as a basic item in a function definition of Fig. 4.

Fig. 5 indicates several diagnostic function items corresponding to diagnostic function items for performing diagnosis on a daily basis, a weekly basis, and a monthly basis.

Diagnostic function items shown in Fig. 5 can be provided to the operator as a basic item. Explanations of each of diagnostic function items shown in Fig. 5 have been omitted for the sake of brevity.

A network diagnostic apparatus for integrating functions described above is described below with reference to the attached drawings.

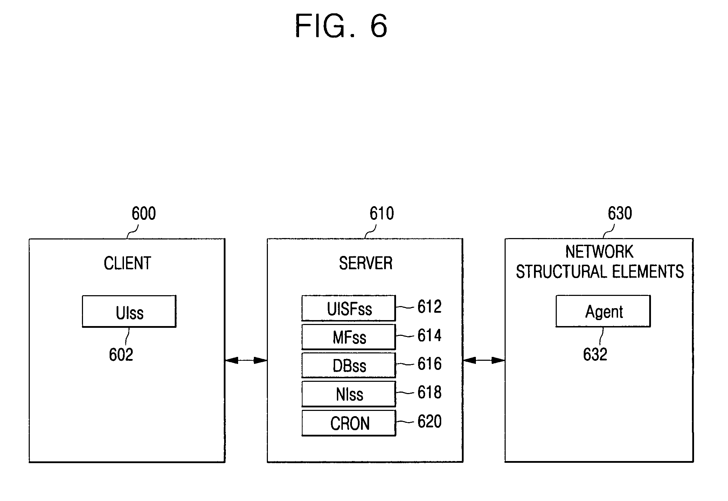

Fig. 6 is a block diagram of a network diagnostic apparatus according to an embodiment of the present invention.

As shown in Fig. 6, the network diagnostic apparatus according to the present invention can comprise a data interface unit (User Interface Server Function subsystem (UISFss)) 612, a diagnostic manager (Management Function subsystem (MFss)) 614, a database (DataBase subsystem (DBss)) 616, and a network interface unit (Network Interface subsystem (NIss)) 618. The UISFss, the MFss, the DBss and the NIss are names of functional blocks for practically embodying functions of each of a data interface unit, a diagnostic manager, a database, and a network interface unit in a system. Hereinafter, the present invention will be explained by using names of these UISFss, MFss, DBss and NIss. However, the present invention is not limited to these names, and the present invention can be applied to all systems comprising structural constituents to perform the same function as that of these structural constituents regardless of these names.

The UISFss 612 receives set data to perform the network diagnosis and outputs the set data to the DBss 616. The set data can include data such as a diagnostic item and a diagnostic cycle, etc. The DBss 616 stores the set data received from the UISFss 612. Speaking strictly, the DBss 616 is not a database but a functional block for storing the received data in the database by using an Application Programming Interface (API). However, in the present invention, the DBss 616 is regarded as a database since there is no necessary to distinguish the DBss from the database.

The MFss 614 performs diagnosis for each diagnostic item established at the set data and stores the result in the database or as a file. The MFss 614 not shown can comprise server functional blocks capable of performing diagnosis according to a characteristic of each diagnostic functional items of Configuration Management (CM), Performance Management (PM), Fault Management (FM), General Management (GM), etc. The MFss 614 performs diagnosis for network structural elements, i.e. the network managing device and object devices for management connected to the network managing device. In addition, diagnosis for network structural elements can be performed by using the NIss 618 as an interface. That is, the NIss 618 is the interface between MFss 614 and network structural elements in performing diagnosis for network structural elements.

On the one hand, the network diagnostic apparatus of the present invention can comprise the scheduler for automatic performance. The scheduler performs a scheduling function of diagnostic item to judge whether it is time to perform diagnosis for each diagnostic item, and then instruct the MFss 614 to perform diagnosis for diagnostic items when it has to do so.

Hereinafter, a cron will be used as an example of the scheduler 620.

The UISFss 612 to the cron 620, i.e. a structural element of the network diagnostic apparatus will be generally situated at a server 610 according to the present invention.

On the other hand, in order to perform the network diagnosis by using the network diagnostic apparatus according to the present invention, the operator must be able to input his instructions to the network diagnostic apparatus.

The network diagnostic apparatus can comprise a User Interface subsystem (UIss) 602 for inputting the operator's instruction like this. The operator's instructions input through the UIss 602 are again input into the UISFss 612 and can be used for the network diagnosis. Set data for performing the network diagnosis can be input into the network diagnostic apparatus through the UIss 602 by the operator. The UIss 602 is generally situated at a client 600. However, the UIss 602 can be situated at the server rather than at the client.

In addition, the network diagnostic apparatus according to the present invention can include an agent 632 situated at a network structural element 630 for diagnosing the network structural element 630. When the agent 632 receives instructions to diagnose network structural elements from the NIss 618, a diagnosis for a corresponding diagnostic item is performed.

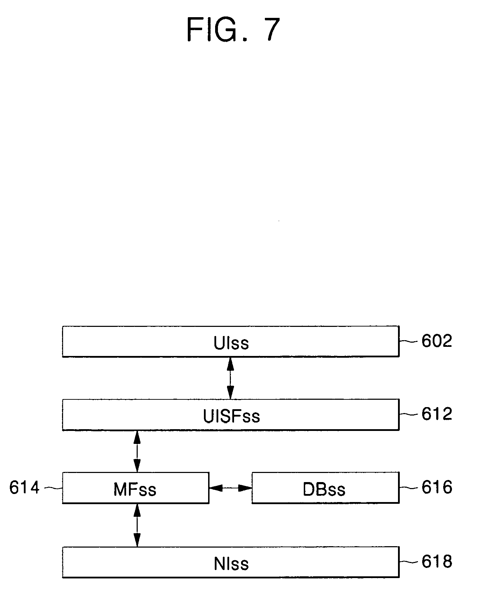

Fig. 7 is a view of a connecting relationship between structural elements of the network diagnostic apparatus of Fig. 6.

Referring to Fig. 7, an input of the set data for performing the network diagnosis according to the present invention and a diagnostic process of network according to the input set data will be described.

The set data for the network diagnosis are input into the UISFss 612 through the UIss 602. The UIss 602 can be situated at the client 600 or the server 610. When the UIss 602 is situated at the client 600, the set data are transmitted to the UISFss 612 of the server 610 through a transmission line for connecting the client 600 and the server 610, and when the UIss 602 is situated at the server 610, the set data are directly input into the UISFss 612 from the UIss 602. In addition, the operator can receive an input interface and display means for confirming the input results from the UIss 602 to in order to input the set data. These will be described later.

The set data input to the UISFss 612 is stored into the DBss 616 through the MFss 614, and is used for diagnosing the network. The MFss 614 refers the set data stored into the DBss 616 and performs a diagnosis for the network managing device, whenever necessary.

That is, according to the embodiment of the network diagnostic apparatus of Fig. 7, the set data can be stored into the DBss 616 through the MFss 614, or can be used for diagnosis by reading from the DBss 616 through the MFss 614. According to the another embodiment, the network diagnostic apparatus can allow either the set data to be stored directly into the DBss 616 from the UISFss 612 or the NIss 618 to directly read the set data stored at the DBss 616. However, the present invention illustrates an embodiment in which access to the DBss 616 is effected through the MFss 614.

Fig. 7 is a view of a network diagnostic apparatus in which only manual performance for the network diagnosis is possible without the cron 620. The cron 620 having a scheduling function for automatically performing the network diagnosis should be included. The cron 620 can be connected to the MFss 614, and can be also operated by the set data. That is, the cron 620 determines whether there is a diagnostic item to be diagnosed at present according to the set data, and instructs the MFss 614 to perform a diagnosis for the diagnostic item when it has to do so.

Hereinafter, the flow of data and signal according to the present invention is described with reference to the accompanying drawings. The input of the set data by the operator through the UIss 602 is as follows.

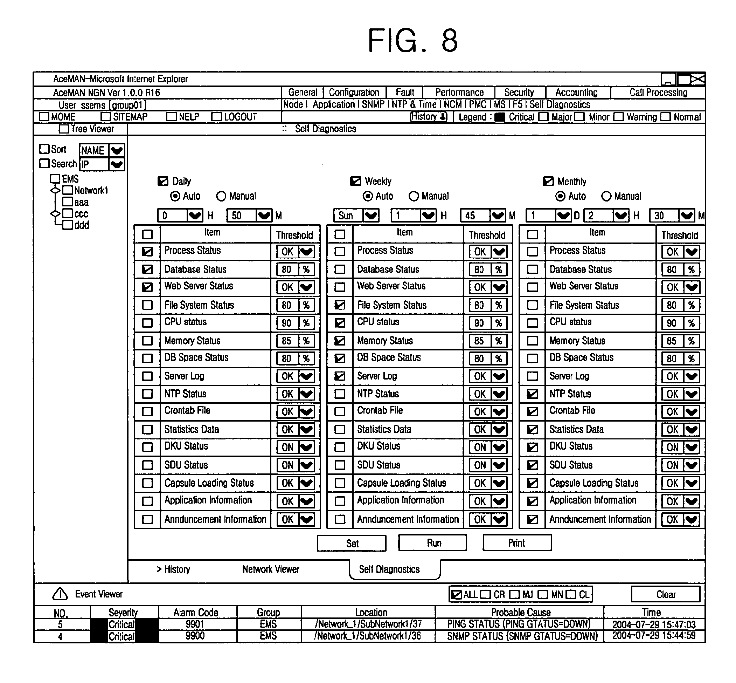

Fig. 8 is a view of network diagnostic functions to comprehensively manage according to the present invention.

The operator can be provided with a display screen as shown in Fig. 8 from the UIss 602. Fig. 8 indicates various data which the operator can select from or confirm.

The display screen of Fig. 8 can be broadly divided into a set area and a button area. The set area is divided into three portions, i.e. "daily diagnosis", "weekly diagnosis", and "monthly diagnosis", and each portion comprises a cycle set unit and an item set unit.

For example, the daily diagnostic portion has a check box to select the daily diagnosis at its top portion. Under the check box, there is a sub portion to select "Auto/Manual", and it is possible to select a diagnostic cycle when Auto is selected. In addition, diagnostic standards for each diagnostic item are displayed. However, the items are provided in a table format, and the basic items are selected by default. They can be changed by the operator. In addition, the operator can confirm diagnostic standards through the display screen of Fig. 8. A network diagnosis complying with these diagnostic standards can be objectively and reliably performed in accordance with the consistent standards.

A button area comprises a "Set" button for storing a set change, a "Run" Button for performing a manual diagnosis, and a "Print" button for outputting the diagnosed results.

A display screen of Fig. 8 can include additional data. In addition, the operator can receive more data from the UIss 602 than that displayed on the display screen of Fig. 8. The operator can receive such data in a different format from the display screen of Fig. 8.

A detailed explanation about such data and a means for providing such data has been omitted for the sake of brevity. However, input of the set data only through the display screen of Fig. 8 and several diagnostic items on the display screen will be described as an example.

The operator can receive the display screen of Fig. 8 from the UIss 602 and input diagnostic item for diagnosis, diagnostic performance conditions for each diagnostic items, and automatic diagnostic performance, etc. on the screen. These input items can be input into the UIss 602 by selecting check-boxes on the display screen of Fig. 8 using point-instruction input means, such as mouse, etc.

Therefore, the set data input from the operator can be transmitted to a network apparatus according to the present invention.

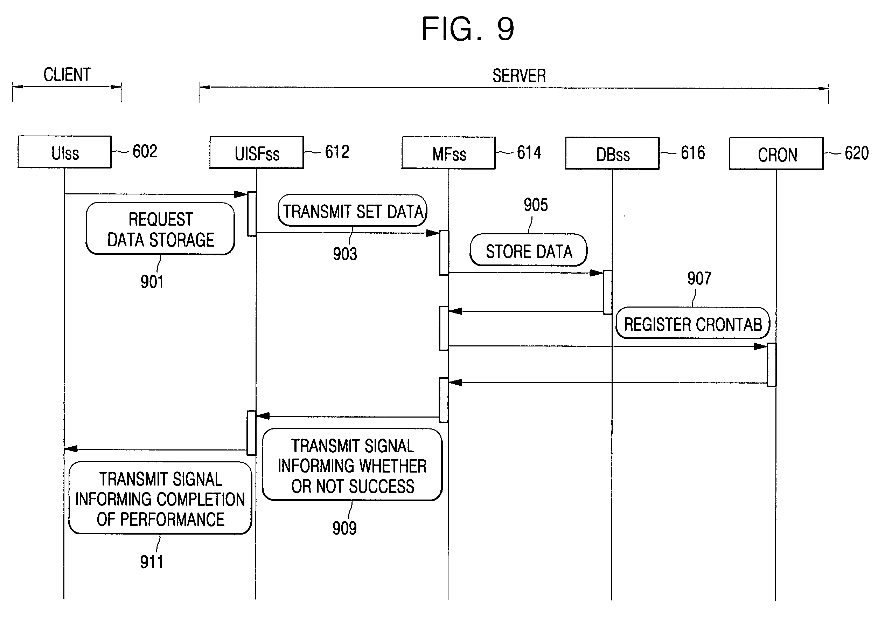

Fig. 9 is a view of set data according to the network diagnosis of the present invention.

The set data input to the UIss 602 is transmitted to the UISFss 612 (step 901) and is again transmitted to the MFss 614 from the UISFss 612 (step 903). The set data is transmitted and stored in the DBss 616 from the MFss 614 (step 905).

In addition to being stored to the DBss 616, the set data can be input to the cron 620 for performing an automatic diagnosis of the network (step 907). In general, the set data input to the cron 620 can become data for scheduling the set data input by the operator.

The DBss 616 and the cron 620 output a signal confirming their receipt of the set data, to the MFss 614. The MFss 614 outputs a signal confirming that the set data was successfully input to the UISFss 612 (step 909), and the UISFss 612 outputs a signal confirming that the set data was successfully input to the UIss 602. The UIss 602 that has received the signal can inform the operator of the successful input of the set data via the screen output.

The diagnostic performance of network according to the input set data is as follows. The automatic performance of the network diagnosis is described first.

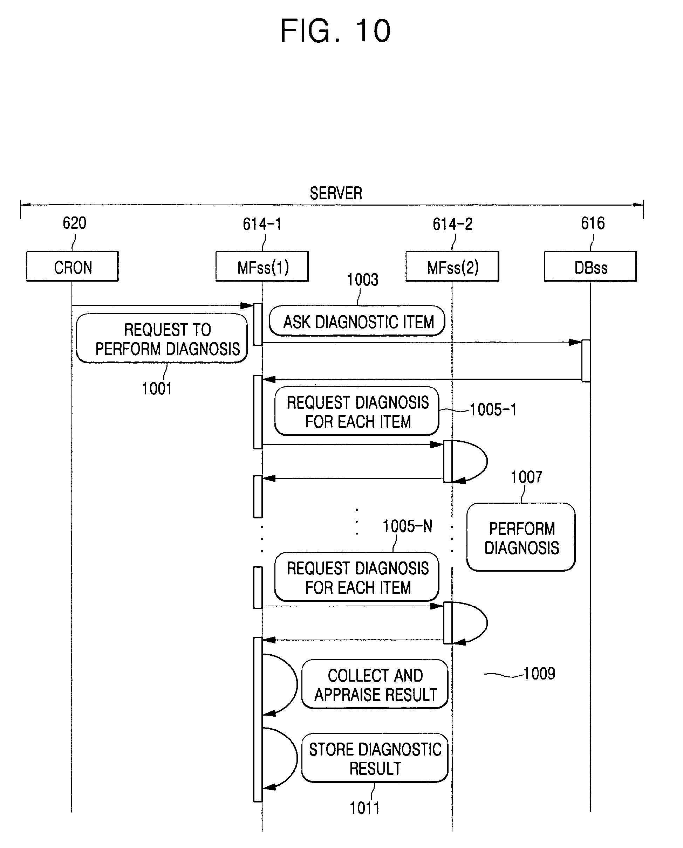

Fig. 10 is a view of the automatic diagnostic order of a network to operate in accordance with the set data input of Fig. 9 according to one embodiment of the present invention.

The cron 620 in Fig. 10, upon a determination that there is at present a diagnostic item for diagnosis, outputs a signal requesting a diagnostic performance for the corresponding diagnostic item to the MFss 614 (step 1001). When the MFss 614 receives the signal requesting the diagnostic performance from the cron 620, data for diagnostic items for diagnosis are read from the set data stored in the DBss 616 (step 1003). The MFss 614 performs a diagnosis of the corresponding diagnostic item according to the read set data (steps 1005 and 1007). In addition, the MFss 614 can be divided into a MFss (1) 614 - 1, i.e. a diagnostic subject and a MFss (2) 614 - 2 for performing a diagnosis. The MFss (1) 614 - 1 asks the DBss 616 for the set data required to perform a diagnosis of the corresponding item and instructs the MFss (2) 614 - 2 (step 1005) to perform a diagnosis according to the set data acquired from the DBss 616. The MFss (2) 614 - 2 performs a diagnosis of each diagnostic item according to the instructions of the MFss (1) 614 - 1.

The diagnostic results for each diagnostic item performed as described above are collected and appraised by the MFss (1) 614 - 1 (step 1009). The appraisal of the diagnosed results can serve as a basis to determine whether the collected diagnostic results satisfy the diagnostic standards included in the set data. The following table 1 indicates the diagnostic standards for appraisal and the appraised results according to the diagnostic standards.

**<Table 1>**

| self diagnostic item | diagnostic reference value | diagnostic result value | appraisal result value |
|---|---|---|---|
| Process Status | OK | OK | Normal |
| Database Status | 80% | 75% | Normal |
| Web Server Status | OK | OK | Normal |
| File System Status | 80% | 60% | Normal |
| CPU Status | 90% | 20% | Normal |
| Memory Status | 85% | 30% | Normal |
| DB Space Status | 80% | 70% | Normal |
| Server Log | OK | OK | Normal |
| NTP Status | OK | OK | Normal |
| Crontab File | OK | OK | Normal |
| Statistics Data | OK | OK | Normal |
| DKU Status | ON | OFF | Abnormal |
| SDU Status | ON | ON | Normal |
| Capsule Loading Status | OK | NOT OK | Abnormal |
| Application Information | OK | OK | Normal |
| Announcement Information | OK | OK | Normal |

With reference to some of items of Table 1, a diagnostic reference value of a process state is "OK" and the diagnostic result value of the process state is "OK". Therefore, an appraisal result value for a processor state is "normal". By the way, a diagnostic reference value of a DKU state is "ON", but a diagnostic result value of the DKU state is "OFF". Therefore, an appraisal result value of the DKU state is "Abnormal". The MFss (1) 614 - 1 can appraise the diagnosed results of each diagnostic item by comparing the diagnostic reference value with the diagnostic result value for each diagnostic item.

The MFss (1) 614 - 1 stores the collected and appraised diagnostic results (step 1011). The diagnosed results can be stored in a txt document format or another document format. In general, the DBss 616a can become storage space for the diagnosed results. Such collected and stored diagnostic results are transmitted to the UIss 602 through the UISFss 612, and can be shown to the operator through the UIss 602. Through such automatic performance of the network diagnosis, the network diagnosis can be periodically performed.

The manual performance of the network diagnosis is as follows.

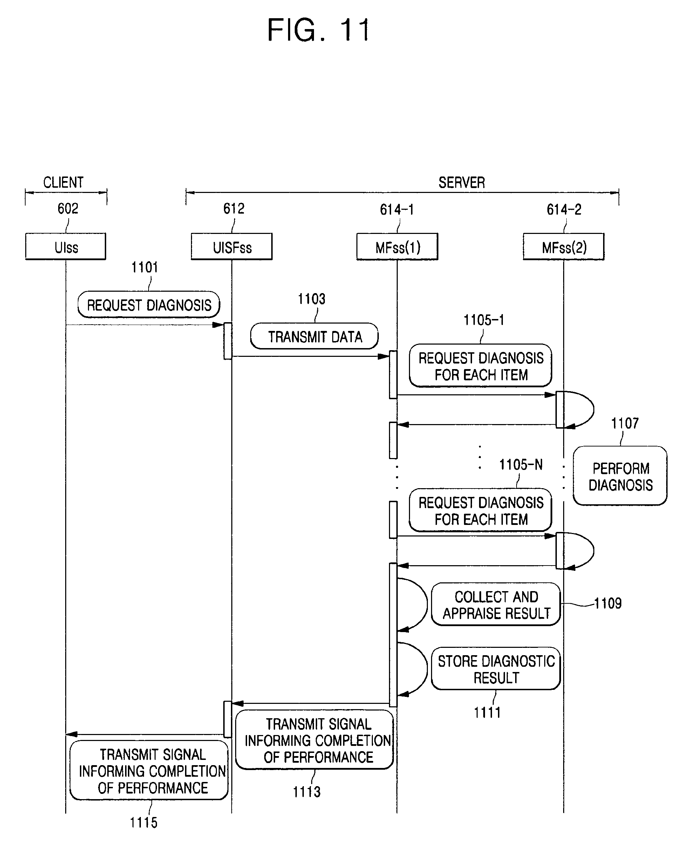

Fig. 11 is a view of the diagnostic order of a manual diagnosis of a network according to another embodiment of the present invention.

As shown in Fig. 11, the manual diagnosis of network does not require the cron 620. In addition, because the manual diagnosis of the network is performed at the moment of the operator's instruction, the DBss 616 for storing the set data is not generally required.

The UIss 602 outputs the set data including instructions on the manual performance of the network diagnosis received from the operator to the UISFss 612 (step 1101). The UISFss 612 outputs the set data received from the UIss 602 to the MFss (1) 614 - 1 (step 1103). The MFss (1) 614 - 1 instructs the MFss (2) 614 - 2 (step 1105) to perform diagnosis of the corresponding diagnostic items according to the set data received from the UISFss 612. The MFss (2) 614 - 2 diagnoses the corresponding diagnostic items according to instructions of the MFss (1) 614 - 1 (step 1107).

Diagnosed results for each diagnostic item performed as described above are collected and stored (step 1111) by the MFss (1) 614 - 1 (step 1109). The diagnosed results can be stored in a txt document format or another document format.

When diagnostic processes for all diagnostic items required for diagnosis have been completed, a signal confirming completion of the diagnosis can be output to the UISFss 612 from the MFss 1, 614 - 1 (step 1113) and again to the UIss 602 from the UISFss 612. A signal confirming completion of the diagnosis can include the information about the diagnosed results.

Such a manual performance of the network diagnosis can be used when the network diagnostic results are required at a predetermined time.

Diagnostic processes according to a network diagnostic method of the present invention are described below with reference to the accompanying drawings.

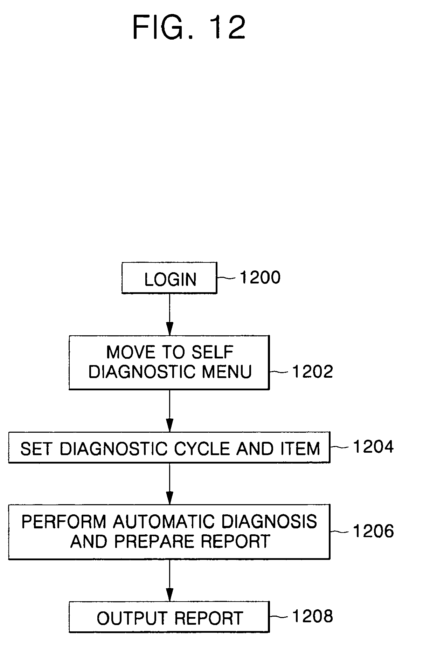

Fig. 12 is a flowchart of the diagnostic order according to the network diagnosis of the present invention.

According to the present invention, when the operator sets a diagnostic cycle and a diagnostic item, diagnosis for the corresponding item according to the diagnostic cycle can be automatically performed and the results thereof can be output. In addition, manual diagnosis for a specific item can be performed.

However, only automatic performance processes of the network diagnosis are described with reference to Fig. 12.

In step 1200, the operator logs in a network diagnostic program. Through such a log-in process, it is assumed that a network diagnostic apparatus of the present invention starts the network diagnostic process. In step 1202, the operator selects a menu of the network diagnosis according to the present invention. The menu can be displayed as the display screen of Fig. 8. Referring to the display screen of Fig. 8 for example, the operator can select a menu for the network diagnosis by selecting "Self Diagnostic" function on a sub Menu of "Configuration" Menu at an upper portion of the screen. At the menu, the network diagnostic apparatus can receive the set data for performing the network diagnosis according to the present invention.

In step 1204, the network diagnostic apparatus of the present invention receives the set data including data such as a diagnostic cycle and a diagnostic item, etc. for automatic performance of the network diagnosis. In step 1206, the network diagnostic apparatus performs automatic diagnosis of the network managing device and the network structural elements, etc. by using the set data received in step 1204, collects and appraises the results of automatic performance of the network diagnosis, and prepares the report. In step 1208, the network device outputs a result report on diagnostic performance prepared in step 1206.

Therefore, the operator can be provided with the convenience since diagnosis, appraisal, and report on a network managing device and an object device to be managed by the network managing device are made possible by automated diagnostic procedures. In addition, it is possible to select a type of diagnostic method (for example, automatic diagnosis, manual diagnosis, etc.) which the operator desires and to perform an objective and consistent diagnosis in accordance with a predetermined appraisal standard at a predetermined time.

While the present invention has been particularly shown and described with reference to exemplary embodiments thereof, it will be understood by those skilled in the art that various modifications in form and detail can be made therein without departing from the spirit and scope of the invention as defined by the appended claims. The exemplary embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. A network diagnostic apparatus comprising:
a database adapted to store set data for diagnosis;
a scheduler adapted to determine whether a condition to perform a diagnosis is satisfied, and to begin diagnosis when it has been determined that the condition to perform a diagnosis has been satisfied; and
a diagnostic manager adapted to perform diagnosis according to the set data stored in the database in response to an instruction to begin diagnosis from the scheduler.

2. The network diagnostic apparatus according to claim 1, further comprising a data interface adapted to receive the set data from outside and to store the set data in the database.

3. The network diagnostic apparatus according to claim 2, further comprising a user interface adapted to receive set data input by an operator via a data input unit and to output the set data input by the operator from the data input unit to the data interface.

4. The network diagnostic apparatus according to claim 3, wherein the set data input unit comprises a screen adapted to display set items that the operator can select and a point-instruction input unit adapted to select items displayed on the screen.

5. The network diagnostic apparatus according to claim 4, wherein the set data input from the user interface is transmitted to the database via the data interface and the diagnostic manager.

6. The network diagnostic apparatus according to claim 1, wherein the scheduler is adapted to determine whether a diagnostic performance condition is satisfied using the set data.

7. The network diagnostic apparatus according to claim 1, wherein the scheduler is adapted to determine whether diagnostic performance conditions are satisfied upon a determination that there is a diagnostic item for performing a diagnosis at present.

8. The network diagnostic apparatus according to claim 1, wherein the diagnostic manager comprises a first diagnostic manager performing as a main diagnostic unit and a second diagnostic manager adapted to perform a diagnosis according to instructions input from the first diagnostic manager.

9. The network diagnostic apparatus according to claim 8, wherein the first diagnostic manager is adapted to request diagnostic items to perform a diagnosis from the database in response to an instruction to begin a diagnostic performance from the scheduler.

10. The network diagnostic apparatus according to claim 8, wherein the second diagnostic manager is adapted to receive item data to perform a diagnosis from the first diagnostic manager and to set data for each item and to perform the diagnosis according to the received data.

11. The network diagnostic apparatus according to claim 1, wherein the diagnostic manager is adapted to collect the diagnosed result after performing the diagnosis according to the set data.

12. The network diagnostic apparatus according to claim 11, wherein the diagnostic manager is adapted to appraise the diagnosed results by comparing the collected diagnostic results with diagnostic reference values included in the set data.

13. A network diagnostic apparatus comprising:
a data interface adapted to receive instructions for diagnostic performance and set data for diagnosis from outside; and
a diagnostic manager adapted to receive instructions for the diagnostic performance and set data from the data interface and to perform a diagnosis according to the set data.

14. The network diagnostic apparatus according to claim 13, further comprising a user interface adapted to receive set data input by an operator via a data input unit and to output the set data input by the operator from the data input unit to the data interface.

15. The network diagnostic apparatus according to claim 14, wherein the set data input unit comprises a screen adapted to display set items that the operator can select and a point-instruction input unit adapted to select items displayed on the screen.

16. The network diagnostic apparatus according to claim 13, wherein the diagnostic manager is adapted to appraise the diagnosed results by collecting the diagnosed results after performing the diagnosis according to the set data and comparing the collected diagnosed results with a diagnostic reference values included in the set data.

17. A network diagnostic method comprising;
receiving set data from an operator, the set data including data of a diagnostic item and a diagnostic cycle of a network to perform a diagnosis; and
performing a diagnosis for each diagnostic item according to the received set data.

18. The network diagnostic method according to claim 17, further comprising collecting, appraising, and storing the diagnosed results from the performed diagnosis.

19. The network diagnostic method according to claim 17, wherein performing the diagnosis comprises determining whether it is time to perform the diagnosis for each diagnostic item, and performing the diagnosis for each diagnostic item upon a determination that it is the time to perform the diagnosis.
